# EUROPÄISCHE PATENTSCHRIFT

(11) **EP 3 114 345 B1**
(45) Veröffentlichungstag und Bekanntmachung des Hinweises auf die Patenterteilung: **28.02.2018**
(21) Anmeldenummer: 15725982.1
(22) Anmeldetag: 06.03.2015
(51) Int. Cl.: F02M 35/12, F02B 33/44

(54) **SCHALLDÄMPFER**
MUFFLER
SILENCIEUX

(30) Priorität: 07.03.2014 AT 501682014
(43) Veröffentlichungstag der Anmeldung: 11.01.2017
(73) Patentinhaber: Henn GmbH & Co KG., 6850 Dornbirn (AT)
(72) Erfinder: HARTMANN, Harald, A-6850 Dornbirn (AT); HUBMANN, Christian, A-6845 Hohenems (AT)
(74) Vertreter: Burger, Hannes
(86) Internationale Anmeldenummer: PCT/AT2015/050059
(87) Internationale Veröffentlichungsnummer: WO 2015/131217

(56) Entgegenhaltungen:
- EP-A1- 2 067 979
- WO-A1-2005/103550
- DE-A1- 19 957 597
- DE-A1-102008 015 353
- DE-A1-102010 020 064
- DE-B3-102008 007 961
- FR-A1- 2 881 191

## Beschreibung

Die Erfindung betrifft einen Schalldämpfer, insbesondere Fahrzeugschallfämpfer, sowie ein mit diesem Schalldämpfer ausgestattetes Fahrzeug, wie dies in den Ansprüchen 1 und 14 angegeben ist.

Die WO 07101412 A1 offenbart einen Schalldämpfer in Modulbauweise sowie dessen Herstellung. Dazu ist eine Vielzahl von Resonatorinnenelementen vorgesehen, die ein Labyrinth von Gängen und Resonatorkammern bilden.

Der Nachteil dieser Konstruktion besteht darin, dass die durch den modulartigen Aufbau miteinander verbundenen Teile in einem komplizierten Herstellprozess zusammengebaut werden müssen, wobei die genaue Positionierung der Einzelteile sehr schwierig ist und eine hohe Anforderung an die Positioniergenauigkeit der Maschinen gestellt wird.

Die DE 10026355 A1 offenbart eine schalldämpfende Luftleitung für einen Luftansaugtrakt einer Brennkraftmaschine mit einem Innenrohr, das radialen Öffnungen aufweist, und einem Dämmstoffmantel, der das Innenrohr radial außen zumindest teilweise umhüllt. Ein Außenrohr umhüllt das Innenrohr und den Dämmstoffmantel vollständig. Sowohl das Außenrohr als auch das Innenrohr bestehen jeweils aus zwei Halbschalen, wobei eine Halbschale des Innenrohrs an einer Halbschale des Außenrohrs schwenkbar gelagert ist und die andere Halbschale des Innenrohrs an der anderen Halbschale des Außenrohrs schwenkbar gelagert ist. Innenrohr, Außenrohr und Dämmstoffmantel sind aus Kunststoff gefertigt.

Der Nachteil dieser Konstruktion besteht darin, dass die Herstellung einer derartigen Luftleitung enormen Aufwand erfordert. Insbesondere die gegenseitige schwenkbare Lagerung der einzelnen Halbschalen erfordert mehrere komplexe Arbeitsgänge und ist in einem vertretbaren Kostenrahmen lediglich mit Kunststoffmaterialien zu verwirklichen. Damit scheidet diese Lösung bei allen Anwendungen aus, bei denen die Verwendung von Metall, z.B. Edelstahl, erforderlich ist.

Die EP 2 067 979 A1 und die FR 2 881 191 A1 offenbaren einen Schalldämpfer mit einer Resonatorkammer und einer Kupplungseinrichtung zur Ankoppelung an einen Turbolader, welche in einer ersten Stirnwand des ersten Gehäuseteils aufgenommen ist. Eine Einströmöffnung eines ersten Gehäuseteils, welche in der ersten Stirnwand angeordnet ist, weist einen im Axialschnitt stufenförmig verjüngend ausgebildeten Ansatz auf, in welchem die Kupplungseinrichtung aufgenommen ist. In der Kupplungseinrichtung ist ein Dichtungselement aufgenommen.

Der vorliegenden Erfindung liegt die Aufgabe zugrunde, einen Schalldämpfer mit einer Kupplungsanbindung zu schaffen, in welchem die Kupplungsanbindung vorteilhaft in den Schalldämpfer integriert ist, um den Anschluss eines mit dem Schalldämpfer zu verbindenden Bauteiles zu erleichtern.

Diese Aufgabe der Erfindung wird durch die Maßnahmen gemäß Anspruch 1 gelöst.

Erfindungsgemäß ist ein Schalldämpfer, insbesondere Fahrzeugschalldämpfer, mit zumindest einer Resonatorkammer ausgebildet. Die Resonatorkammer ist durch zumindest einen ersten Gehäuseteil mit einem ersten Außenmantel und einer einströmseitig angeordneten ersten Stirnwand, in welcher eine Einströmöffnung angeordnet ist, und einen ersten innenliegenden Rohrabschnitt begrenzt. Weiters weist der Schalldämpfer zumindest eine Kupplungseinrichtung zur Ankoppelung an einen Turbo, welche in der ersten Stirnwand des ersten Gehäuseteils aufgenommen ist auf, und welche Kupplungseinrichtung einen Kupplungskörper umfasst. Der Kupplungskörper ist als Blechumformteil, etwa einem Tiefziehteil, ausgebildet und auch der erste Gehäuseteil ist einteilig aus einem Blechumformteil, etwa einem Tiefziehteil, gebildet, wobei die Einströmöffnung des ersten Gehäuseteils einen im Axialschnitt stufenförmig verjüngend ausgebildeten Ansatz aufweist, in welchem der Kupplungskörper und ein Dichtungselement, etwa ein Radial-Dichtring, aufgenommen ist. Die Verwendung von Blechumformteilen, im speziellen Tiefziehteilen bringt den Vorteil mit sich, dass die Einzelteile eine komplexe Geometrie aufweisen können. Weiters können Tiefziehteile ressourcenschonend gefertigt werden, da bei Tiefziehteilen nur wenig Verschnitt und somit Materialabfall anfällt. Darüber hinaus ist die Wiederholgenauigkeit bei der Fertigung von Tiefziehteilen sehr gut, wodurch dieser Fertigungsprozess sehr gut für die Massenproduktion geeignet ist. Durch den Tiefziehvorgang kommt es darüber hinaus zu einer gewissen Kaltverfestigung der einzelbauteile, wodurch auch die Festigkeitseigenschaften der einzelnen Bauteile positiv beeinflusst werden.

Vorteilhaft an der erfindungsgemäßen Ausbildung ist, dass die Kupplungseinrichtung, insbesondere der Kupplungskörper einfach mit einem ersten Gehäuseteil des Schalldämpfers verbunden sein kann. Hierbei kann ein Dichtungselement vorteilhaft im Schalldämpfer aufgenommen werden, sodass eine Abdichtung gegenüber einem mit der Kupplungseinrichtung des Schalldämpfers zu kuppelnden Teil hergestellt werden kann. Weiters ist die Verbindung zwischen Gehäuseteil und Kupplungskörper einfach herzustellen, sodass ein derartiger Schalldämpfer besonders in einem industriellen Fertigungsprozess einer Massenfertigung vorteilhaft hergestellt werden kann. Dadurch kann eine hohe Prozesssicherheit und eine kostengünstige Fertigung realisiert werden. Weiters ist der Schalldämpfer sehr einfach aufgebaut und somit robust und wenig fehleranfällig.

Weiters kann es zweckmäßig sein, wenn der Kupplungskörper einen Außenmantel aufweist, welcher als Befestigungsabschnitt ausgebildet ist und dass an den Befestigungsabschnitt eine Stirnwand anschließt, welche sich in Richtung Querschnittszentrum erstreckt, und welche als axiales Anschlagelement ausgebildet ist. Von Vorteil ist hierbei, dass ein derartiger Befestigungsabschnitt des Kupplungskörpers mit dem ersten Gehäuseteil vorteilhaft verbunden werden kann. Die Stirnwand des Kupplungskörpers kann hierbei als Anschlagelement dienen, um den Kupplungskörper relativ zum ersten Gehäuseteil zu positionieren.

Ferner kann vorgesehen sein, dass die Stirnwand des Kupplungskörpers an dessen radial gesehen innenliegenden Abschnitt eine Umbördelung aufweist. Von Vorteil an einer derartigen Umbördelung ist, dass sie der Stirnwand eine gute Stabilität verleiht. Dadurch kann die Stirnwand auch mit Axialkräften belastet werden, ohne dass es hierbei zu übermäßigen Verformungen kommt.

Darüber hinaus kann vorgesehen sein, dass im stufenförmig verjüngend ausgebildeten Ansatz an die erste Stirnwand des ersten Gehäuseteils ein erster Axialabschnitt anschließt, welcher sich in Richtung Resonatorkammer erstreckt, und welcher als Kupplungsaufnahme ausgebildet ist und in dessen erster Innenwandung der Kupplungskörper aufgenommen ist, wobei der Kupplungskörper mit dessen Außenmantel an der Innenwandung der Kupplungsaufnahme anliegt. Von Vorteil ist hierbei, dass dadurch der Kupplungskörper präzise zum ersten Gehäuseteil positioniert werden kann und gut im ersten Gehäuseteil aufgenommen werden kann.

Vorteilhaft ist auch eine Ausprägung, gemäß welcher anschließend an den ersten Axialabschnitt des Gehäuseteils ein erster Radialabschnitt ausgebildet ist, welcher sich in Richtung Querschnittszentrum erstreckt, und welcher als Axialanschlag für den Kupplungskörper ausgebildet ist, wobei die Stirnwand des Kupplungskörpers am ersten Radialabschnitt anliegt. Von Vorteil ist hierbei, dass dadurch der Kupplungskörper relativ zum ersten Gehäuseteil in Axialrichtung positioniert werden kann.

Gemäß einer Weiterbildung ist es möglich, dass an den ersten Radialabschnitt ein zweiter Axialabschnitt anschließt, welcher sich in Richtung Resonatorkammer erstreckt, und welcher als Dichtungsaufnahme ausgebildet ist, wobei an dessen zweiter Innenwandung das Dichtungselement aufgenommen ist, und wobei der zweite Axialabschnitt eine kleinere Querschnittsabmessung aufweist, als der erste Axialabschnitt. Von Vorteil ist hierbei, dass das Dichtungselement in diesem Querschnitt aufgenommen werden kann und somit eine Abdichtung gegenüber einem weiteren Bauteil herstellen kann.

Ferner kann es zweckmäßig sein, dass anschließend an den zweiten Axialabschnitt des Gehäuseteils ein zweiter Radialabschnitt ausgebildet ist, welcher sich in Richtung Querschnittszentrum erstreckt, und welcher als Axialanschlag für das Dichtungselement ausgebildet ist. Von Vorteil ist hierbei, dass dadurch das Dichtungselement auch in Axialrichtung gesichert im ersten Gehäuseteil aufgenommen ist.

Darüber hinaus kann vorgesehen sein, dass an den zweiten Radialabschnitt ein dritter Axialabschnitt anschließt, welcher sich in Richtung Resonatorkammer erstreckt, und welcher als innenliegender Rohrabschnitt ausgebildet ist, wobei der dritte Axialabschnitt eine kleinere Querschnittsabmessung aufweist, als der zweite Axialabschnitt. Von Vorteil ist hierbei, dass ein innenliegender Rohrabschnitt zur Bildung einer Resonatorkammer durch den ersten Gehäuseteil ausgeformt wird. Somit kann auf weitere Bauteile, welche einen innenliegenden Rohrabschnitt ausbilden würden, verzichtet werden und ein komplexer Aufbau des Schalldämpfers aus mehreren Einzelteilen vermieden werden.

Weiters kann vorgesehen sein, dass der Axialabstand zwischen einer ersten Anschlagfläche des ersten Radialabschnittes und einer zweiten Anschlagfläche des zweiten Radialabschnittes geringfügig größer ist, als eine Axialerstreckung des Dichtungselementes. Von Vorteil ist hierbei, dass dadurch das Dichtungselement axial gesichert im Schalldämpfer aufgenommen werden kann und im eingebauten Zustand trotzdem keine Axiale Belastung auf das Dichtungselement aufgebracht wird, sodass die Dichtwirkung nicht negativ beeinflusst wird.

Ferner ist es zweckmäßig, dass die Stirnwand des Kupplungskörpers sich weiter in Richtung Querschnittszentrum erstreckt, als die Innenwandung des zweiten Axialabschnittes, wodurch die Stirnwand einen gegenüber dem zweiten Axialabschnitt vorstehenden Teilbereich ausbildet, und wodurch das Dichtungselement gegen axiale Verschiebung gesichert im stufenförmig verjüngend ausgebildeten Ansatz aufgenommen ist. Von Vorteil ist hierbei, dass dadurch das Dichtungselement axial gesichert im Schalldämpfer aufgenommen werden kann, ohne das zusätzliche Bauteile hinzugefügt werden müssen. Dadurch kann der Fertigungsaufwand eines derartig ausgebildeten Schalldämpfers minimiert werden und somit die Prozesssicherheit während des Fertigungsvorganges erhöht werden.

Entsprechend einer vorteilhaften Weiterbildung kann vorgesehen sein, dass der Befestigungsabschnitt des Kupplungskörpers mit dem ersten Axialabschnitt und/oder mit der Stirnwand des ersten Gehäuseteils durch eine stoffschlüssige Verbindung, wie eine Schweißverbindung, insbesondere eine Laserschweißverbindung, verbunden ist. Von Vorteil ist hierbei, dass eine derartige stoffschlüssige Verbindung einfach herzustellen ist und darüber hinaus dazu geeignet ist die einzelnen Bauteile ausreichend zu verbinden. Eine Laserschweißverbindung weist darüber hinaus den Vorteil auf, dass der in die Schweißverbindung eingebrachte Wärmeeintrag lokal begrenzt ist und somit die Flächen, an welchen das Dichtelement anliegt nicht zu heiß werden, wodurch das Dichtelement geschont werden kann.

Alternativ dazu kann vorgesehen sein, dass die Stirnwand des Kupplungselementes mit dem ersten Radialabschnitt des ersten Gehäuseteils durch eine stoffschlüssige Verbindung, wie eine Schweißverbindung, insbesondere eine Laserschweißverbindung, verbunden ist. Von Vorteil ist hierbei, dass eine derartige stoffschlüssige Verbindung einfach herzustellen ist und darüber hinaus dazu geeignet ist die einzelnen Bauteile ausreichend zu verbinden. Eine Laserschweißverbindung weist darüber hinaus den Vorteil auf, dass der in die Schweißverbindung eingebrachte Wärmeeintrag lokal begrenzt ist und somit die Flächen, an welchen das Dichtelement anliegt nicht zu heiß werden, wodurch das Dichtelement geschont werden kann.

In einer weiteren Alternativvariante kann vorgesehen sein, dass der Befestigungsabschnitt des Kupplungskörpers mit dem ersten Axialabschnitt des ersten Gehäuseteils durch eine formschlüssige Verbindung, wie eine Verpressung, verbunden ist. Von Vorteil ist hierbei, dass eine derartige Verpressung einfach herzustellen ist. Dadurch ist diese Verbindung besonders gut für die Serienpoduktion geeignet. Weiters wird durch eine formschlüssige Verbindung die Notwendigkeit einer Schweißverbindung vermieden, wodurch der Wärmeeintrag und somit ein möglicher Wärmeverzug im Schalldämpfer 1 vermieden werden kann.

Die erfindungsgemäße Ausführung weist den Vorteil auf, dass der Schalldämpfer durch möglichst wenig Einzelteile zusammengesetzt ist, welche miteinander verbunden werden müssen. Dadurch kann der Fertigungsaufwand gering gehalten werden, da möglichst wenig Schweißstellen produziert werden müssen. Somit kann die Ausfallsicherheit des Schalldämpfers erhöht werden und weiters die Produktionskosten für einen derartigen Schalldämpfer minimal gehalten werden. Ein derartiger erfindungsgemäßer Schalldämpfer weist darüber hinaus den Vorteil auf, dass die Thermische Belastung auf die Einzelbauteile während des Herstellvorganges möglichst gering gehalten werden kann. Dadurch können innere Spannungen in den Einzelteilen des Schalldämpfers und ein Verzug aufgrund der inneren Spannungen möglichst minimiert, bzw. vermieden werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Schalldämpfers;
- Fig. 2: eine Schnittdarstellung eines Schalldämpfers mit Schnittführung entlang seiner Mittellinie;
- Fig. 3: eine Schnittdarstellung eines weiteren Ausführungsbeispiels eines Schalldämpfers mit Schnittführung entlang seiner Mittellinie;
- Fig. 4: eine Schnittdarstellung eines Schalldämpfers mit Detailansicht der Kupplungsverbindung, welche durch Stoffschluss realisiert ist;
- Fig. 5: eine Explosionszeichnung eines Schalldämpfers;
- Fig. 6: ein Kraftfahrzeug mit einem an den Turbolader angeschlossenen Schalldämpfer;
- Fig. 7: eine Schnittdarstellung eines Schalldämpfers mit Detailansicht der Kupplungsverbindung, welche durch Formschluss realisiert ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

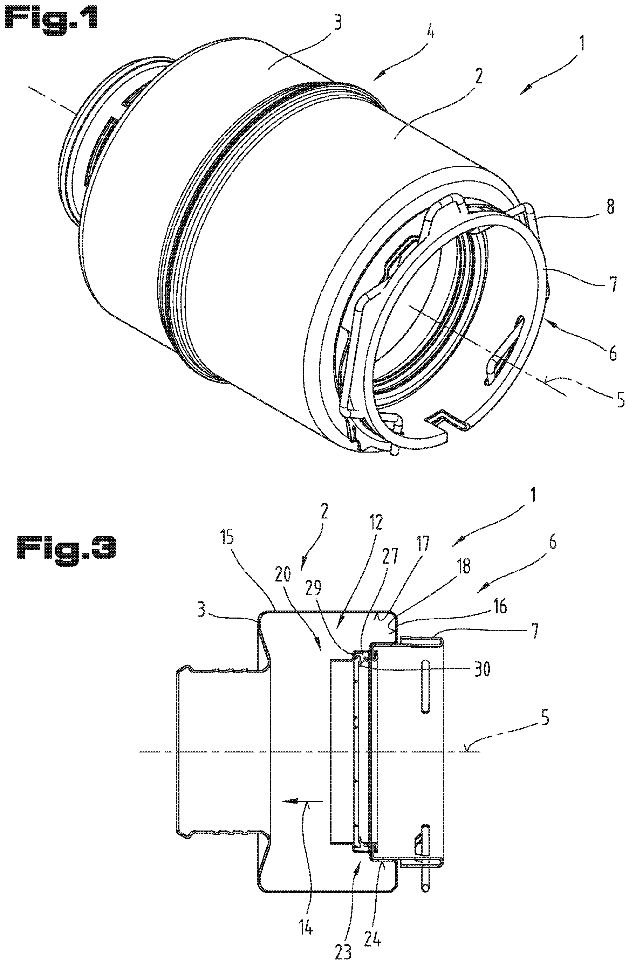

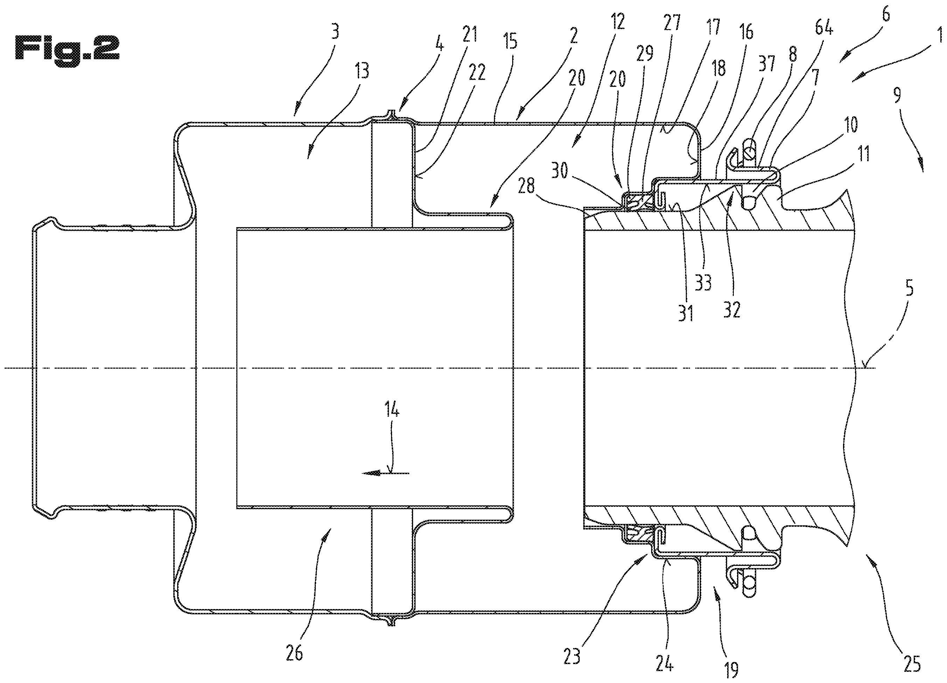

Die Figuren 1 und 2 zeigen eine erste Ausführungsvariante eines Schalldämpfers 1, insbesondere eines Fahrzeugschalldämpfers.

Fig. 1 zeigt eine perspektivische Ansicht des Schalldämpfers 1. Der in dieser Ansicht dargestellte Schalldämpfer 1 weist einen ersten Gehäuseteil 2 und einen zweiten Gehäuseteil 3 auf, welche in einem Verbindungsbereich 4 miteinander verbunden sind. Es ist jedoch auch möglich, dass nur an einteiliges Gehäuse ausgeführt ist, welches den Innenraum des Schalldämpfers ausbildet. Der Schalldämpfer 1 ist als rotationssymmetrischer Hohlkörper ausgebildet und weist daher eine Mittelachse 5 auf. Die in weiterer Folge noch genauer beschriebene, erfindungsgemäße Ausführung ist jedoch nicht auf einen rotationssymmetrischen Hohlkörper beschränkt, sondern es ist auch denkbar, dass der Schalldämpfer 1 etwa einen rechteckigen oder einen polygonen Querschnitt aufweist.

An das erste Gehäuseteil 2 ist eine Kupplungseinrichtung 6 angeschlossen, welche dazu vorgesehen ist, um den Schalldämpfer 1 an einen Turbolader 9 koppeln zu können. Die Kupplungseinrichtung 6 dient besonders dazu, um den Schalldämpfer 1 im falle eines Schadens des Turboladers 9 oder im Falle einer notwendigen Motorreparatur bedarfsweise möglichst schnell und einfach vom Turbolader 9 entfernen und wieder am Turbolader 9 applizieren zu können. Die Kupplungseinrichtung 6 umfasst einen Kupplungskörper 7, welcher dazu ausgebildet ist um mit einem Anschlussstutzen des Turboladers 9 verbunden, bzw. aufgeschoben zu werden.

Fig. 2 zeigt einen Schnitt durch einen Schalldämpfer 1 entlang seiner Mittelachse 5. In dieser Schnittdarstellung sind die Kupplungseinrichtung 6, sowie deren Kupplungskörper 7 gut zu erkennen. Weiters kann an der Kupplungseinrichtung 6 ein Befestigungselement 8 vorgesehen sein, durch welches der Schalldämpfer 1 am Turbolader 9 befestigt werden kann. Dieses Befestigungselement 8 kann beispielsweise, wie hier dargestellt als Drahtbügel ausgeführt werden. Dieses Befestigungselement 8 kann mit einer entsprechenden Ausnehmung 10 im Turbolader 9, respektive einer Ausnehmung 10 in einem Anschlussstutzen 11 des Turboladers 9, zusammenwirken.

Der Schalldämpfer 1 ist in Fig.2 im verbauten Zustand des Schalldämpfers 1 gezeigt, wobei der Anschlussstutzen 11 des Turboladers 9 in den Schalldämpfer 1, respektive in die Kupplungseinrichtung 6 eingeschoben ist.

Der dargestellte Schalldämpfer 1 umfasst weiters eine erste Resonatorkammer 12 und eine zweite Resonatorkammer 13. In einer Durchströmrichtung 14 gesehen, ist die erste Resonatorkammer 12 vor der zweiten Resonatorkammer 13 angeordnet. Weiters kann auch vorgesehen sein, dass anstatt zwei Resonatorkammern 12, 13 nur eine Resonatorkammer 12 oder gleich mehrere Resonatorkammern vorgesehen sind. Für die erfindungsgemäße Ausgestaltung des Schalldämpfers 1 ist es nicht relevant, wie viele Resonatorkammern dieser Umfasst, sondern alleinig, wie die erste, möglicherweise auch einzige, Resonatorkammer 12, respektive das erste Gehäuseteil 2 ausgeführt ist.

Die erste Resonatorkammer 6 wird hierbei begrenzt durch einen ersten Außenmantel 15 und eine erste Stirnwand 16. Der erste Außenmantel 15 sowie die erste Stirnwand 16 sind hierbei im ersten Gehäuseteil 2 umfasst. Präzise gesagt wird die erste Resonatorkammer 12 in deren Außenbereich durch eine Innenmantelfläche 17 des ersten Außenmantels 9 und durch eine Stirninnenfläche 18 der ersten Stirnwand 16 begrenzt.

Die erste Stirnwand 16 weist eine Einströmöffnung 19 auf, durch welche das Medium, insbesondere die komprimierte Ansaugluft, in die erste Resonatorkammer 12 einströmen kann.

Die erste Resonatorkammer 12 wird weiters durch einen ersten innenliegenden Rohrabschnitt 14 respektive durch eine Außenmantelfläche 15 des ersten innenliegenden Rohrabschnittes 20 und durch eine Kammertrennwand 21, respektive eine erste Wandfläche 22 der Kammertrennwand 21 begrenzt. Bei einer Ausführungsvariante in welcher der Schalldämpfer 1 nur eine Resonatorkammer 12 aufweist ist anstatt der Kammertrennwand 21 direkt der erste oder zweite Gehäuseteil 2, 3 an die erste Resonatorkammer 12 angeschlossen.

Weiters ist vorgesehen, dass die Einströmöffnung 19 einen im Axialschnitt stufenförmig verjüngend ausgebildeten Ansatz 23 zur Aufnahme der Kupplungseinrichtung 6, insbesondere des Kupplungskörper 7 aufweist. Hierbei ist der stufenförmig verjüngend ausgebildeten Ansatz 23 so in die erste Resonatorkammer 12 einstehend ausgebildet sein, dass dieser die erste Resonatorkammer 12 an deren Innenseite begrenzt. Insbesondere ist vorgesehen, dass eine außenliegende Mantelfläche 24 des stufenförmig verjüngend ausgebildeten Ansatzes 23 die erste Resonatorkammer 12 begrenzt.

Der erste Gehäuseteil 2 ist somit einströmseitig 25 des Resonators respektive des Schalldämpfers 1 angeordnet.

In der Ausführungsvariante gemäß Fig. 2 umfasst der Schalldämpfer 1, welcher zwei Resonatorkammern aufweist, einen ersten Gehäuseteil 2, einen zweiten Gehäuseteil 3 und ein Resonatorinnenelement 26. Das Resonatorinnenelement 26 sowie der erste Gehäuseteil 2 und der zweite Gehäuseteil 3 sind in einer vorteilhaften Ausführungsvariante als Tiefziehteile ausgebildet. Insbesondere ist es vorteilhaft, wenn das erste Gehäuseteil 2 als Tiefziehteil ausgebildet ist.

Im folgenden Beschreibungsteil werden die Einzelteile, welche der Schalldämpfer 1 umfasst, in deren Ausgestaltung genau beschrieben. Es sei jedoch darauf hingewiesen, dass die Gestaltung dieser Einzelteile sich auf eine vorteilhafte Ausführungsvariante des Schalldämpfers 1 beziehen. Es ist nicht zwingend erforderlich, dass für die erfindungsgemäße Ausbildung sämtliche hier beschriebenen Ausbildungsmerkmale der Einzelteile realisiert werden bzw. diese wie hier beschrieben gestaltet werden.

Der erste Gehäuseteil 2 umfasst einen ersten Außenmantel 15. Einströmseitig des Schalldämpfers 1 ist anschließend an den ersten Außenmantel 15 die erste Stirnwand 16 ausgebildet, an welche die Einströmöffnung 19 und der im Axialschnitt stufenförmig verjüngend ausgebildete Ansatz 23 zur Aufnahme der Kupplungseinrichtung 6 anschließt. Die erste Stirnwand 16 schließt hierbei in Richtung Zentrum verlaufend an den ersten Außenmantel 15 an.

Weiters umfasst der Schalldämpfer 1 ein Dichtungselement 27 welches das erste Gehäuseteil 2 gegenüber dem Anschlussstutzen 11 des Turboladers 9 abdichtet.

Wie in Fig. 2 ersichtlich, ist der Schalldämpfer 1 im montierten Zustand, in dem er auf den Anschlussstutzen 11 des Turboladers 9 aufgesteckt ist, durch das Befestigungselement 8 gegen axiale Verschiebung gesichert. Das Dichtungselement 27 sorgt für die ausreichende Dichtwirkung zwischen Schalldämpfer 1 und Anschlussstutzen 11. Das Dichtungselement 27 ist hierbei vorzugweise als radiale Dichtung ausgeführt, sodass der Schalldämpfer 1 einfach und unkompliziert auf den Anschlussstutzen 11 des Turboladers 9 aufgesteckt werden kann. Um das Dichtungselement 27 währen des Einsteckvorganges des Anschlussstutzens 11 nicht zu beschädigen, kann hierbei vorgesehen sein, dass der Anschlussstutzen 11 eine Fase 28 aufweist, um ein leichtgängiges Fügen der beiden Teile zueinander zu ermöglichen.

Im verbauten Zustand von Schalldämpfer 1 und Turbolader 9, wie in Fig. 2 dargestellt, liegt eine erste Dichtlippe 29 des Dichtungselementes 27 am stufenförmig verjüngend ausgebildeten Ansatz 23 des ersten Gehäuseteiles 2 an und eine zweite Dichtlippe 30 liegt an einer Dichtfläche 31 des Anschlussstutzens 11 vom Turbolader 9 an. Weiters kann vorgesehen sein, dass der Anschlussstutzen 11 dermaßen ausgebildet ist, dass im eingebauten Zustand ein Teilbereich des Außenumfanges 32 zusammen mit dem Kupplungskörper 7, insbesondere mit einer Innenmantelfläche 33 des Kupplungskörpers 7 eine Spielpassung bildet. Dadurch kann auch die radiale Position des Schalldämpfers 1 relativ zum Turbolader 9 sehr gut fixiert werden. Darüber hinaus kann vorgesehen sein, dass die Dichtfläche 31 des Anschlussstutzens 11 am stufenförmig verjüngend ausgebildeten Ansatz 23 des ersten Gehäuseteils 2 anliegt und somit die Lage des Schalldämpfers 1 relativ zum Turbolader 9 weiters fixiert wird.

In der Fig. 3 ist eine weitere und gegebenenfalls für sich eigenständige Ausführungsform des Schalldämpfers 1 gezeigt, wobei wiederum für gleiche Teile gleiche Bezugszeichen bzw.

Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Die in der Fig. 3 gezeigte Ausführungsvariante des Schalldämpfers 1 aufweist nur eine erste Resonatorkammer 12 auf. Der hier dargestellte Schalldämpfer 1 kann neben einem ersten Gehäuseteil 2 noch ein zweites Gehäuseteil 3 umfassen. Es ist jedoch auch möglich, dass das erste Gehäuseteil 2 einstückig ausgebildet ist und somit kein zweites Gehäuseteil 3 notwendig ist.

Fig. 3 zeigt den Schalldämpfer 1 in einem zusammengebauten Zustand, wobei jedoch der Schalldämpfer 1 nicht am Anschlussstutzen 11 des Turboladers 9 befestigt ist.

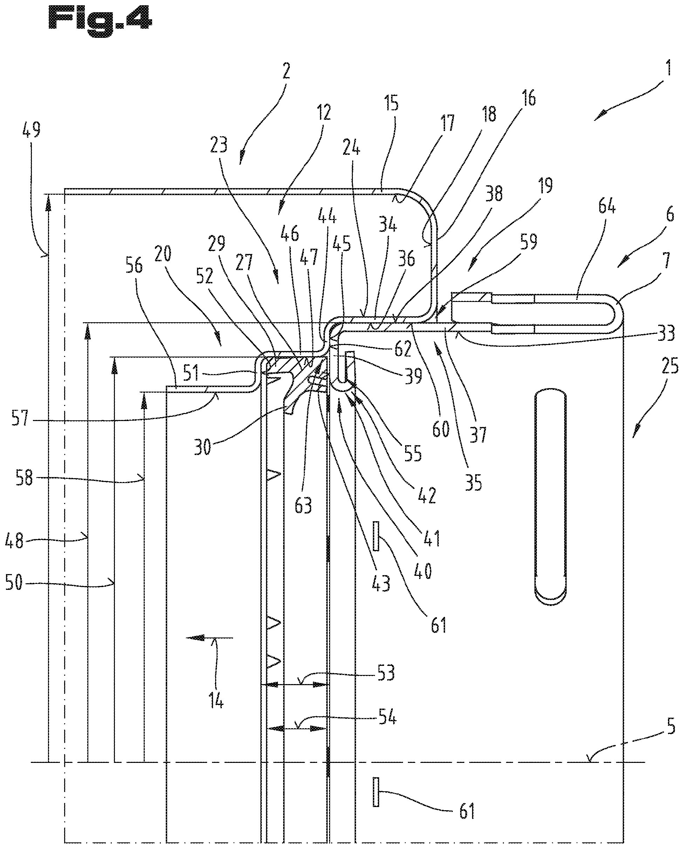

Fig. 4 zeigt die Detailansicht der Schnittstelle zwischen Kupplungseinrichtung 6 und erstem Gehäuseteil 2. Da die erfindungsgemäßen Details des Schalldämpfers 1 an dieser Übergangsschnittstelle vorhanden sind, ist es nicht maßgeblich, ob der Schalldämpfer eine oder mehrere Resonatorkammern aufweist.

In der Ansicht aus Fig. 4 ist gut erkennbar, dass im stufenförmig verjüngend ausgebildeten Ansatz 23 an die erste Stirnwand 16 des ersten Gehäuseteils 2 ein erster Axialabschnitt 34 anschließt. Der erste Axialabschnitt 34 erstreckt sich hierbei ausgehend von der ersten Stirnwand 16 in Richtung erster Resonatorkammer 12, das heißt in Axialrichtung gesehen weg von der Einströmseite 25. Der erste Axialabschnitt 34 ist hierbei als Kupplungsaufnahme 35 ausgebildet, wobei eine Innenwandung 36 der Kupplungsaufnahme 35 mit einem Außenmantel 37 des Kupplungskörpers 7 zusammenwirkt bzw. in Verbindung steht. Im Außenmantel 37 des Kupplungskörpers 7 ist hierbei ein Befestigungsabschnitt 38 ausgebildet, welcher die Innenwandung 36 der Kupplungsaufnahme 35 kontaktiert.

Der Kupplungskörper 7 weist anschließend an seinen Außenmantel 37 weiters eine Stirnwand 39 auf, welche als axiales Anschlagelement 40 ausgebildet ist. Die Stirnwand 39 erstreckt sich hierbei ausgehend vom Befestigungsabschnitt 38 in Richtung Querschnittszentrum, wobei vorgesehen sein kann, dass an dem radial gesehen innen liegenden Abschnitt 41 der Stirnwand 39 des Kupplungskörpers 7 eine Umbördelung 42 vorgesehen ist. Dabei ist vorzugsweise die Stirnwand 39 in Richtung Einströmseite 25 umgebördelt sein, sodass sich eine glatte Anschlagfläche 43 an der Stirnwand 39 ergibt.

Weiters kann vorgesehen sein, dass anschließend an einen ersten Axialabschnitt 34 des ersten Gehäuseteils 2 ein erster Radialabschnitt 44 ausgebildet ist, welcher sich in Richtung Querschnittszentrum erstreckt. Dieser Radialabschnitt 44 kann als Axialanschlag für den Kupplungskörper verwendet werden. Hierbei liegt die Stirnwand 39, insbesondere eine Anschlagfläche 43 der Stirnwand 39 des Kupplungskörpers 7 am ersten Radialabschnitt 44, insbesondere an einer ersten Anschlagfläche 45 des ersten Radialabschnittes 44 an.

Weiters kann vorgesehen sein, dass an den ersten Radialabschnitt 44 ein zweiter Axialabschnitt 46 anschließt, welcher sich ausgehend vom Radialabschnitt 44 in Richtung Resonatorkammer 12, das heißt weg von der Einströmseite 25, erstreckt. Der zweite Axialabschnitt 46 ist hierbei als Dichtungsaufnahme ausgebildet, wobei an dessen zweiter Innenwandung 47 das Dichtungselement 27 aufgenommen ist.

Eine Querschnittsabmessung 48 des ersten Axialabschnittes 34 ist kleiner als eine Querschnittsabmessung 49 des ersten Außenmantels 15. Weiters ist eine Querschnittsabmessung 50 des zweiten Axialabschnittes 46 kleiner als eine Querschnittsabmessung 48 des ersten Axialabschnittes 34. Das Dichtungselement 27 ist an den Durchmesser des zweiten Axialabschnittes 46, insbesondere der zweiten Innenwandung 47 angepasst.

Anschließend an den zweiten Axialabschnitt 46 ist ein zweiter Radialabschnitt 51 ausgebildet, welcher sich in Richtung Querschnittszentrum erstreckt. Dieser zweite Radialabschnitt 51 kann als Axialanschlag für das Dichtungselement 27 dienen. Insbesondere wird durch den zweiten Radialabschnitt 51 eine zweite Anschlagfläche 52 ausgebildet, gegen welche das Dichtungselement 27 gedrückt werden kann.

Der erste Radialabschnitt 44 und der zweite Radialabschnitt 51 sind so zueinander positioniert, dass ein Axialabstand 53 zwischen der ersten Anschlagfläche 45 und zwischen der zweiten Anschlagfläche 52 größer ist als eine Axialerstreckung 54 des Dichtungselements 27. Dadurch kann das Dichtungselement 27 gut im zweiten Axialabschnitt 46 aufgenommen werden.

Weiters kann vorgesehen sein, dass die Stirnwand 39 des Kupplungskörpers 7 sich weiter in Richtung Querschnittszentrum erstreckt als die Innenwandung 47 des zweiten Axialabschnittes 46. Dadurch bildet die Stirnwand 39 einen gegenüber dem zweiten Axialabschnitt 46 vorstehenden Teilbereich 55 aus. Mit anderen Worten ausgedrückt, erstreckt sich die Stirnwand 39 des Kupplungskörpers 7 weiter in Richtung Querschnittszentrum als der mit der Stirnwand 39 korrespondierende erste Radialabschnitt 44.

Dadurch kann erreicht werden, dass das Dichtungselement 27 axial gesichert zwischen Stirnwand 39 des Kupplungskörpers 7 und zwischen zweiten Radialabschnitt 51, insbesondere zwischen den Anschlagflächen 43 und 52 platziert ist. Somit kann sichergestellt werden, dass das Dichtungselement 27 beim Anstecken bzw. Abnehmen des Schalldämpfers 1 vom Anschlussstutzen 11 des Turboladers 9, nicht in axialer Richtung verschoben wird.

Weiters kann vorgesehen sein, dass an den zweiten Radialabschnitt 51 ein dritter Axialabschnitt 56 anschließt, welcher sich in Richtung Resonatorkammer 12 erstreckt, sich also in eine von der Einströmseite 25 abgewendete Seite erstreckt. Eine Innenwandung 57 des dritten Axialabschnittes 56 kann hierbei als Führungsfläche zur Aufnahme und zum Kontakt mit der Dichtfläche 31 des Anschlussstutzens 11 dienen. Die Querschnittsabmessung 58 des dritten Axialabschnittes 56 ist kleiner als eine Querschnittsabmessung 50 des zweiten Axialabschnittes 46.

Die einzelnen soeben beschriebenen Axialabschnitte bzw. Radialabschnitte des stufenförmig verjüngend ausgebildeten Ansatzes 23 können gleichzeitig als innenliegender Rohrabschnitt 20 ausgebildet sein.

Der Kupplungskörper 7 ist vorzugsweise durch eine stoffschlüssige Verbindung, wie etwa eine Schweißverbindung, mit dem ersten Gehäuseteil 2 verbunden. Als Schweißverbindungsverfahren wird hierbei vorzugsweise Laserschweißen bzw. Plasmaschweißen angewendet. Es gibt mehrere verschiedene Möglichkeiten, eine Schweißnaht zu platzieren, durch welche der Kupplungskörper 7 mit dem ersten Gehäuseteil 2 verbunden werden kann.

Beispielsweise ist es möglich, dass eine erste Kehlnat 59 ausgebildet ist, welche im Radius zwischen erster Stirnwand 16 sowie ersten Axialabschnitt 34 des ersten Gehäuseteils und Außenmantel 37 des Kupplungskörpers 7 eingebracht wird.

Weiters ist es möglich, dass die Schweißnaht in Form einer Flächenverbindung 60 zwischen Befestigungsabschnitt 38 des Kupplungskörpers 7 und Innenwandung 36 der Kupplungsaufnahme 35 eingebracht wird. Hierbei kann vorgesehen sein, dass der Außenmantel 37 des Kupplungskörpers 7 schlitzartige Ausnehmungen 61 zum Einbringen der Schweißenergie aufweist.

Weiters ist es auch möglich, dass als Schweißverbindung eine zweite Flächenverbindung 62 zwischen erster Anschlagfläche 45 des ersten Radialabschnittes 44 und Anschlagfläche 43 der Stirnwand 39 des Kupplungskörpers 7 eingebracht wird. Auch hier kann vorgesehen sein, dass die Stirnwand 39 des Kupplungskörpers 7 nicht weiter dargestellte, schlitzartige Ausnehmungen aufweist, durch welche die Schweißenergie in die Zwischenfläche eingebracht werden kann.

Weiters ist es möglich, dass eine zweite Kehlnat 63 ausgeführt wird, welche zwischen einem Übergangsradius des ersten Radialabschnittes 44 und des zweiten Axialabschnittes 46 sowie der Stirnwand 39 des Kupplungskörpers 7 platziert ist.

Darüber hinaus ist es auch möglich, dass beispielsweise ein weiterer Außenmantel 46 des Kupplungskörpers 7 dermaßen ausgebildet und geformt ist, sodass er an die erste Stirnwand 16 des ersten Gehäuseteils 2 anstößt und mit dieser durch eine Schweißverbindung verbunden werden kann.

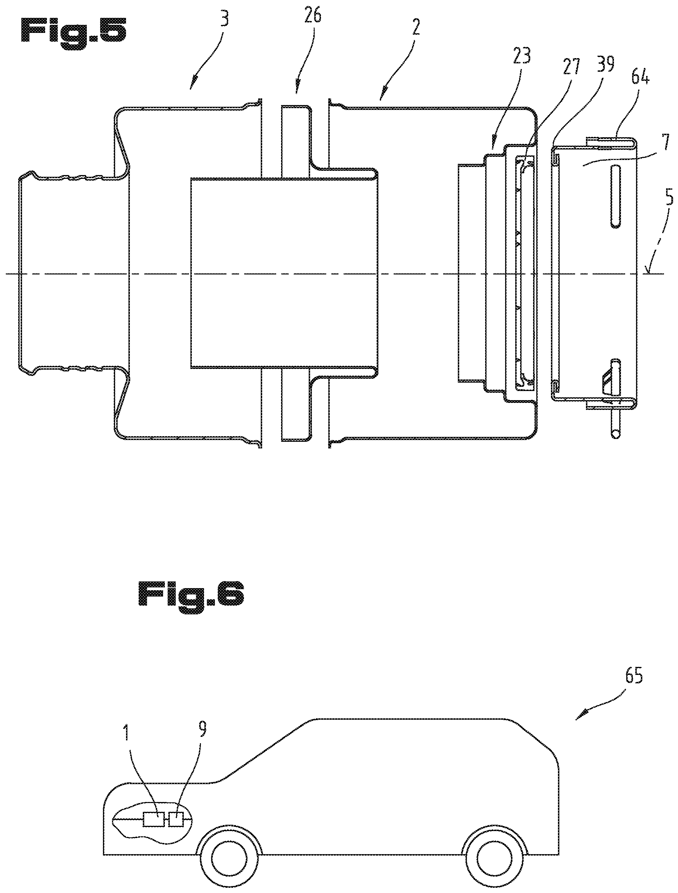

Fig. 5 zeigt eine Explosionszeichnung des Schalldämpfers 1. Hierbei ist gut ersichtlich wie der Schalldämpfer 1 gefertigt bzw. zusammengebaut wird.

Am Beginn des Produktionsprozesses werden zumindest der erste Gehäuseteil 2 sowie der Kupplungskörper 7 tiefgezogen, sodass sie ihre charakteristische Form erhalten.

In einem weiteren Verfahrensschritt wird das erste Gehäuseteil 2 von einer Vorrichtung bzw. einem Manipulationsroboter gehalten. Anschließend kann das Dichtungselement 27 axial in das Gehäuseteil 2, insbesondere in den stufenförmig verjüngend ausgebildeten Ansatz 23 eingesetzt werden.

Ist nun das Dichtungselement 27 zum ersten Gehäuseteil 2 platziert, so kann in einem weiteren Verfahrensschritt der Kupplungskörper 7 in den stufenförmig verjüngend ausgebildeten Ansatz 23 eingeschoben werden. Der Kupplungskörper 7 ist hierbei so auszurichten, dass die Stirnwand 39 des Kupplungskörpers 7 zum ersten Gehäuseteil 2 hin zeigt. Der Kupplungskörper 7 kann soweit in den ersten Gehäuseteil 2 eingeschoben werden, bis die Anschlagfläche 43 der Stirnwand 39 an der ersten Anschlagfläche 45 des ersten Radialabschnittes 44 anliegt. Der Kupplungskörper 7 muss somit nicht axial zum ersten Gehäuseteil 2 positioniert werden, sondern kann bis auf Anschlag in diesen eingeschoben werden.

In einem weiteren Verfahrensschritt werden der Kupplungskörper 7 sowie der erste Gehäuseteil 2 durch eine Schweißverbindung, insbesondere eine Laser- oder Plasmaschweißverbindung, miteinander verbunden. Eine Laser- oder Plasmaschweißverbindung haben den Vorteil, dass der Wärmeeintrag nur sehr gering und lokal begrenzt ist. Dadurch wird das Dichtungselement 27 während des Schweißvorganges nicht beschädigt.

Fig. 6 zeigt ein Fahrzeug 65, mit dem Turbolader 9 und einem auf der Druckseite des Turboladers 9 angeschlossenen, erfindungsgemäßen Schalldämpfer 1.

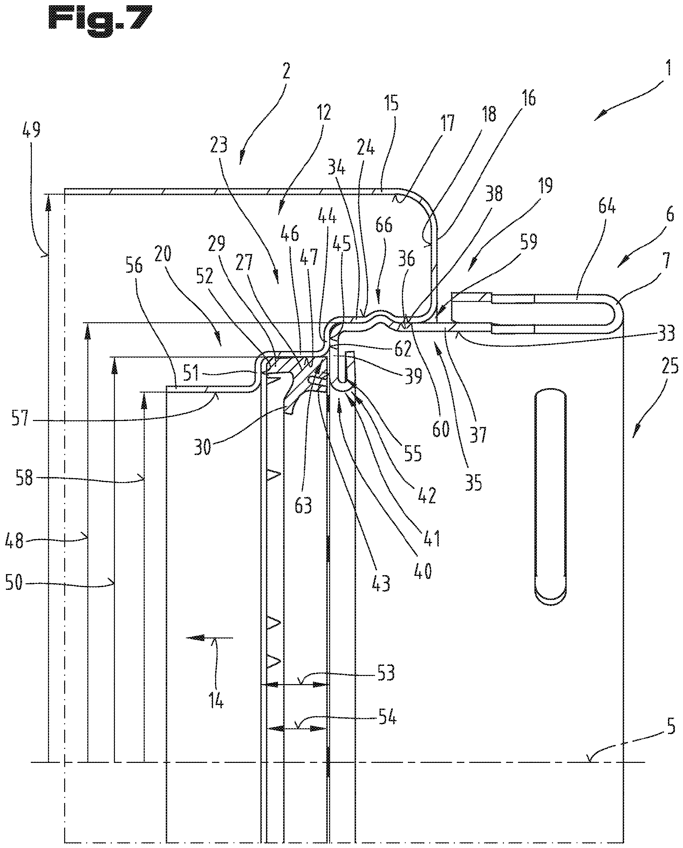

In der Fig. 7 ist eine weitere und gegebenenfalls für sich eigenständige Ausführungsform des Schalldämpfers 1 gezeigt, wobei wiederum für gleiche Teile gleiche Bezugszeichen bzw. Bauteilbezeichnungen wie in den vorangegangenen Figuren 1, 2 und 4 verwendet werden. Um unnötige Wiederholungen zu vermeiden, wird auf die detaillierte Beschreibung in den vorangegangenen Figuren 1, 2 und 4 hingewiesen bzw. Bezug genommen.

Wie in Fig. 7 ersichtlich ist es auch denkbar, dass der Kupplungskörper 7 und der erste Gehäuseteil 2 nicht miteinander verschweißt werden, sondern dass diese durch eine formschlüssige Verbindung miteinander verbunden werden. Diese formschlüssige Verbindung kann in Form einer Verpressung 66 realisiert werden. Eine derartige Verpressung 66 kann besonders gut zwischen erstem Axialabschnitt 34 und Befestigungsabschnitt 38 des Kupplungskörpers 7 hergestellt werden. Hierbei werden diese Wandabschnitte miteinander verformt, sodass die formschlüssige Verbindung entsteht. Diese formschlüssige Verbindung kann durch ein Werkzeug hergestellt werden, welches innerhalb des Kupplungskörpers 7 platziert wird und den Befestigungsabschnitt 38 des Kupplungskörpers 7 nach außen drückt. Die formschlüssige Verbindung kann hierbei durch eine umlaufende Verpressung 66 gebildet sein. Es ist jedoch auch möglich, dass die Verpressung 66 nur in umfänglichen Segmentabschnitten ausgebildet ist.

Die Ausführungsbeispiele zeigen mögliche Ausführungsvarianten des Schalldämpfers 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren lund 2, 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Schalldämpfers 1, dieser bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Schalldämpfer | 30 | zweite Dichtlippe |
| 2 | erster Gehäuseteil | 31 | Dichtfläche |
| 3 | zweiter Gehäuseteil | 32 | Teilbereich Außenumfang |
| 4 | Verbindungsbereich | 33 | Innenmantelfläche des Kupplungskörpers |
| 5 | Mittelachse | | |
| 6 | Kupplungseinrichtung | 34 | erster Axialabschnitt |
| 7 | Kupplungskörper | 35 | Kupplungsaufnahme |
| 8 | Befestigungselement | 36 | Innenwandung der Kupplungsaufnahme |
| 9 | Turbolader | | |
| 10 | Ausnehmung | 37 | Außenmantel des Kupplungskörpers |
| 11 | Anschlussstutzen | | |
| 12 | erste Resonatorkammer | 38 | Befestigungsabschnitt des Kupplungskörpers |
| 13 | zweite Resonatorkammer | | |
| 14 | Durchströmrichtung | 39 | Stirnwand des Kupplungskörpers |
| 15 | erster Außenmantel | 40 | axiales Anschlagelement |
| 16 | erste Stirnwand | 41 | radial innenliegender Abschnitt |
| 17 | Innenmantelfläche | 42 | Umbördelung |
| 18 | Stirninnenfläche | 43 | Anschlagfläche |
| 19 | Einströmöffnung | 44 | erster Radialabschnitt |
| 20 | innenliegender Rohrabschnitt | 45 | erste Anschlagfläche |
| 21 | Kammertrennwand | 46 | zweiter Axialabschnitt |
| 22 | erste Wandfläche | 47 | zweite Innenwandung |
| 23 | stufenförmig verjüngend ausgebildeter Ansatz | 48 | Querschnittsabmessung erster Axialabschnitt |
| 24 | Mantelfläche | 49 | Querschnittsabmessung erster Außenmantel |
| 25 | einströmseitig | | |
| 26 | Resonatorinnenelement | 50 | Querschnittsabmessung zweiter Axialabschnitt |
| 27 | Dichtungselement | | |
| 28 | Fase | 51 | zweiter Radialabschnitt |
| 29 | erste Dichtlippe | 52 | zweite Anschlagfläche |
| 53 | Axialabstand | | |
| 54 | Axialerstreckung | | |
| 55 | vorstehender Teilbereich | | |
| 56 | dritter Axialabschnitt | | |
| 57 | Innenwandung dritter Axialabschnitt | | |
| 58 | Querschnittsabmessung dritter Axialabschnitt | | |
| 59 | erste Kehlnat | | |
| 60 | erste Flächenverbindung | | |
| 61 | schlitzartige Ausnehmung | | |
| 62 | zweite Flächenverbindung | | |
| 63 | zweite Kehlnat | | |
| 64 | weiterer Außenmantel des Kupplungskörpers | | |
| 65 | Fahrzeug | | |
| 66 | Verpressung | | |

## Patentansprüche

1. Schalldämpfer (1), insbesondere Fahrzeugschalldämpfer, mit zumindest einer Resonatorkammer (12), welche zumindest durch einen ersten Gehäuseteil (2) mit einem ersten Außenmantel (15) und einer einströmseitig (25) angeordneten ersten Stirnwand (16), in welcher eine Einströmöffnung (19) angeordnet ist, und einen ersten innenliegenden Rohrabschnitt (20) begrenzt ist, und zumindest einer Kupplungseinrichtung (6) zur Ankoppelung an einen Turbolader (9), welche in der ersten Stirnwand (16) des ersten Gehäuseteils (2) aufgenommen ist, und welche Kupplungseinrichtung (6) einen Kupplungskörper (7) umfasst, wobei der Kupplungskörper (7) als Blechumformteil, etwa als Tiefziehteil, ausgebildet ist und der erste Gehäuseteil (2) aus einem Blechumformteil, etwa einem Tiefziehteil, gebildet ist, wobei die Einströmöffnung (19) des ersten Gehäuseteils (2) einen im Axialschnitt stufenförmig verjüngend ausgebildeten Ansatz (23) aufweist, in welchem der Kupplungskörper (7) und ein Dichtungselement (27), etwa ein Radial-Dichtring, aufgenommen ist, **dadurch gekennzeichnet, dass** eine erste Dichtlippe (29) des Dichtungselementes (27) am stufenförmig verjüngend ausgebildeten Ansatz (23) des ersten Gehäuseteiles (2) anliegt.

2. Schalldämpfer nach Anspruch 1, **dadurch gekennzeichnet, dass** der Kupplungskörper (7) einen Außenmantel (37) aufweist, an welchem ein Befestigungsabschnitt (38) ausgebildet ist und dass an den Befestigungsabschnitt (38) eine Stirnwand (39) anschließt, welche sich in Richtung Querschnittszentrum erstreckt, und welche als axiales Anschlagelement (40) ausgebildet ist.

3. Schalldämpfer nach Anspruch 2, **dadurch gekennzeichnet, dass** die Stirnwand (39) des Kupplungskörpers (7) an dessen radial gesehen innenliegendem Abschnitt (55) eine Umbördelung (42) aufweist.

4. Schalldämpfer nach einem der vorhergehenden Ansprüche, **dadurch gekennzeichnet, dass** im stufenförmig verjüngend ausgebildeten Ansatz (23) an die erste Stirnwand (16) des ersten Gehäuseteils (2) ein erster Axialabschnitt (34) anschließt, welcher sich in Richtung Resonatorkammer (12) erstreckt, und welcher als Kupplungsaufnahme (35) ausgebildet ist und in dessen erster Innenwandung (36) der Kupplungskörper (7) aufgenommen ist, wobei der Kupplungskörper (7) mit dessen Außenmantel (37) an der Innenwandung (36) der Kupplungsaufnahme (35) anliegt.

5. Schalldämpfer nach Anspruch 4, **dadurch gekennzeichnet, dass** anschließend an den ersten Axialabschnitt (34) des ersten Gehäuseteils (2) ein erster Radialabschnitt (44) ausgebildet ist, welcher sich in Richtung Querschnittszentrum erstreckt, und welcher als Axialanschlag für den Kupplungskörper (7) ausgebildet ist, wobei die Stirnwand (39), insbesondere eine Anschlagfläche (43) der Stirnwand (39), des Kupplungskörpers (7) am ersten Radialabschnitt (44) anliegt.

6. Schalldämpfer nach Anspruch 5, **dadurch gekennzeichnet, dass** an den ersten Radialabschnitt (44) ein zweiter Axialabschnitt (46) anschließt, welcher sich in Richtung Resonatorkammer (12) erstreckt, und welcher als Dichtungsaufnahme ausgebildet ist, wobei an dessen zweiter Innenwandung (47) das Dichtungselement (27) aufgenommen ist, und wobei der zweite Axialabschnitt (46) eine kleinere Querschnittsabmessung (50, 48) aufweist, als der erste Axialabschnitt (20).

7. Schalldämpfer nach Anspruch 6, **dadurch gekennzeichnet, dass** anschließend an den zweiten Axialabschnitt (46) des ersten Gehäuseteils (2) ein zweiter Radialabschnitt (51) ausgebildet ist, welcher sich in Richtung Querschnittszentrum erstreckt, und welcher als Axialanschlag für das Dichtungselement (27) ausgebildet ist.

8. Schalldämpfer nach Anspruch 7, **dadurch gekennzeichnet, dass** an den zweiten Radialabschnitt (51) ein dritter Axialabschnitt (56) anschließt, welcher sich in Richtung Resonatorkammer (12) erstreckt, wobei der dritte Axialabschnitt (56) eine kleinere Querschnittsabmessung (58, 50) aufweist, als der zweite Axialabschnitt (46).

9. Schalldämpfer nach einem der Ansprüche 7 bis 8, **dadurch gekennzeichnet, dass** der Axialabstand (53) zwischen einer ersten Anschlagfläche (45) des ersten Radialabschnittes (44) und einer zweiten Anschlagfläche (52) des zweiten Radialabschnittes (51) geringfügig größer ist, als eine Axialerstreckung (54) des Dichtungselementes (27).

10. Schalldämpfer nach einem der Ansprüche 6 bis 9, **dadurch gekennzeichnet, dass** die Stirnwand (39) des Kupplungskörpers (7) sich weiter in Richtung Querschnittszentrum erstreckt, als die Innenwandung (47) des zweiten Axialabschnittes (46), wodurch die Stirnwand (39) einen gegenüber dem zweiten Axialabschnitt (46) vorstehenden Teilbereich (55) ausbildet, und wodurch das Dichtungselement (27) gegen axiale Verschiebung gesichert im stufenförmig verjüngend ausgebildeten Ansatz (23) aufgenommen ist.

11. Schalldämpfer nach einem der Ansprüche 4 bis 10, **dadurch gekennzeichnet, dass** der Befestigungsabschnitt (38) des Kupplungskörpers (7) mit dem ersten Axialabschnitt (34) und/oder mit der ersten Stirnwand (16) des ersten Gehäuseteils (2) durch eine stoffschlüssige Verbindung, wie eine Schweißverbindung, insbesondere eine Laserschweißverbindung, verbunden ist.

12. Schalldämpfer nach einem der Ansprüche 5 bis 10, **dadurch gekennzeichnet, dass** die Stirnwand (39) des Kupplungskörpers (7) mit dem ersten Radialabschnitt (44) des ersten Gehäuseteils (2) durch eine stoffschlüssige Verbindung, wie eine Schweißverbindung, insbesondere eine Laserschweißverbindung, verbunden ist.

13. Schalldämpfer nach einem der Ansprüche 4 bis 10, **dadurch gekennzeichnet, dass** der Befestigungsabschnitt (38) des Kupplungskörpers (7) mit dem ersten Axialabschnitt (34) des ersten Gehäuseteils (2) durch eine formschlüssige Verbindung, wie eine Verpressung (66), verbunden ist.

14. Fahrzeug, insbesondere straßengebundenes Fahrzeug, mit einem Schalldämpfer (1), insbesondere einem Turbolader-Schalldämpfer, der an der Druckseite eines Turboladers (9) angeordnet ist, **dadurch gekennzeichnet, dass** der Schalldämpfer (1) nach einem der vorhergehenden Ansprüche ausgebildet ist.

## Claims

1. A muffler (1), in particular a vehicle muffler, comprising at least one resonator chamber (12) which is bounded by at least a first housing part (2) having a first outer jacket (15) and having a first end wall (16) which is arranged on the inflow side (25) and in which an inflow opening (19) is arranged, and by a first internal pipe segment (20), and at least one coupling device (6) for coupling to a turbocharger (9), which is accommodated in the first end wall (16) of the first housing part (2), and which coupling device (6) comprises a coupling body (7), wherein the coupling body (7) is designed as a shaped sheet metal part, such as a deep-drawn part, and the first housing part (2) is formed from a shaped sheet metal part, such as a deep-drawn part, wherein the inflow opening (19) of the first housing part (2) has an extension (23) which is tapered in steps in an axial section and in which the coupling body (7) and a sealing element (27), such as a radial sealing ring, are accommodated, **characterized in that** a first sealing lip (29) of the sealing element (27) rests against the first housing part's (2) extension (23) which is tapered in steps.

2. The muffler according to claim 1, **characterized in that** the coupling body (7) has an outer jacket (37) on which a fixing portion (38) is formed, and that the fixing portion (38) is adjoined by an end wall (39) which extends in the direction of the cross-section center and which is formed as an axial stop element (40).

3. The muffler according to claim 2, **characterized in that** the end wall (39) of the coupling body (7) is provided with an over-beading (42) on its internal portion (55), as viewed radially.

4. The muffler according to any one of the preceding claims, **characterized in that** in the extension tapered in steps (23), the first end wall (16) of the first housing part (2) is adjoined by a first axial portion (34) which extends in the direction of the resonator chamber (12) and which is provided in the form of a coupling mount (35), and in the first internal wall (36) of which the coupling body (7) is accommodated, wherein the coupling body (7) rests with its outer jacket (37) against the internal wall (36) of the coupling mount (35).

5. The muffler according to claim 4, **characterized in that** the first axial portion (34) of the first housing part (2) is adjoined by a first radial portion (44) which extends in the direction of the cross-section center and which is formed as an axial stop for the coupling body (7), wherein the end wall (39), in particular a stop surface (43) of the end wall (39), of the coupling body (7) rests against the first radial portion (44).

6. The muffler according to claim 5, **characterized in that** the first radial portion (44) is adjoined by a second axial portion (46) which extends in the direction of the resonator chamber (12) and which is formed as a seal mount, wherein the sealing element (27) is accommodated on the second internal wall (47) thereof and wherein the second axial portion (46) has a smaller cross-sectional dimension (50, 48) than the first axial portion (20).

7. The muffler according to claim 6, **characterized in that** the second axial portion (46) of the first housing part (2) is adjoined by a second radial portion (51) which extends in the direction of the cross-section center and which is formed as an axial stop for the sealing element (27).

8. The muffler according to claim 7, **characterized in that** the second radial portion (51) is adjoined by a third axial portion (56) which extends in the direction of the resonator chamber (12), wherein the third axial portion (56) has a smaller cross-sectional dimension (58, 50) than the second axial portion (46).

9. The muffler according to any one of claims 7 to 8, **characterized in that** the axial distance (53) between a first stop surface (45) of the first radial portion (44) and a second stop surface (52) of the second radial portion (51) is slightly bigger than an axial extension (54) of the sealing element (27).

10. The muffler according to any one of claims 6 to 9, **characterized in that** the end wall (39) of the coupling body (7) extends farther in the direction of the cross-section center than the internal wall (47) of the second axial portion (46), as a result of which the end wall (39) forms a part-region (55) protruding beyond the second axial portion (46), and as a result of which the sealing element (27) is accommodated in the extension tapered in steps (23) in a secured manner so as to prevent axial movement.

11. The muffler according to any one of claims 4 to 10, **characterized in** the fixing portion (38) of the coupling body (7) is connected to the first axial portion (34) and/or to the first end wall (16) of the first housing part (2) by a cohesively bonded connection, such as a welded connection, in particular a laser welded connection.

12. The muffler according to any one of claims 5 to 10, **characterized in that** the end wall (39) of the coupling body (7) is connected to the first radial portion (44) of the first housing part (2) by a cohesively bonded connection, such as a welded connection, in particular a laser welded connection.

13. The muffler according to any one of claims 4 to 10, **characterized in that** the fixing portion (38) of the coupling body (7) is connected to the first axial portion (34) of the first housing part (2) by a positive connection, such as a press-fit connection (66).

14. A vehicle, in particular a road vehicle, having a muffler (1), in particular a turbocharger-muffler disposed on the pressure side of a turbocharger (9), **characterized in that** the muffler (1) is formed according to any one of the preceding claims.

## Revendications

1. Silencieux (1), plus particulièrement silencieux de véhicule, avec au moins une chambre de résonateur (12), qui est limitée par une première partie de boîtier (2) avec une première enveloppe extérieure (15) et une première paroi frontale (16) disposée du côté de l'entrée (25), dans laquelle est réalisée une ouverture d'entrée (19), et une première portion tubulaire intérieure (20), et au moins un dispositif de couplage (6) pour le couplage à un turbocompresseur (9), qui est logé dans la première paroi frontale (16) de la première partie de boîtier (2) et ce dispositif de couplage (6) comprenant un corps de couplage (7), le corps de couplage (7) étant conçu comme une pièce en tôle déformée, par exemple une pièce emboutie, et la première partie de boîtier (2) étant constituée d'une pièce en tôle déformée, par exemple d'une pièce emboutie, l'ouverture d'entrée (19) de la première partie de boîtier (2) comprenant un embout (23) se rétrécissant par paliers en coupe axiale, dans lequel le corps de couplage (7) et un élément d'étanchéité (27), par exemple une bague d'étanchéité radiale, sont logés, **caractérisé en ce qu'**une première lèvre d'étanchéité (29) de l'élément d'étanchéité (27) s'appuie contre l'embout (23) se rétrécissant par paliers de la première partie de boîtier (2).

2. Silencieux selon la revendication 1, **caractérisé en ce que** le corps de couplage (7) comprend une enveloppe extérieure (37), sur laquelle une portion de fixation (38) est réalisée et **en ce que**, à la portion de fixation (38) se raccorde une paroi frontale (39) qui s'étend en direction du centre de la section transversale et qui est conçue comme un élément de butée axial (40).

3. Silencieux selon la revendication 2, **caractérisé en ce que** la paroi frontale (39) du corps de couplage (7) comprend, sur sa portion intérieure (55), vue dans la direction radiale, comprend un bard rabattu (42).

4. Silencieux selon l'une des revendications précédentes, **caractérisé en ce que**, dans l'embout (23), qui se rétrécit par paliers, à la paroi frontale (16) de la première partie de boîtier (2), se raccorde une première portion axiale (34), qui s'étend en direction de la chambre de résonateur (12) et qui est conçue comme un logement de couplage (35) et dans la paroi intérieure (36) de laquelle est logé le corps de couplage (7), le corps de couplage (7) s'appuyant, avec son enveloppe extérieure (37), contre la paroi intérieure (36) du logement de couplage (35).

5. Silencieux selon la revendication 4, **caractérisé en ce que**, suite à la première portion axiale (34) de la première partie de boîtier (2), est réalisée une première portion radiale (44), qui s'étend en direction du centre de la section transversale, et qui est conçue comme une butée axiale pour le corps de couplage (7), la paroi frontale (39), plus particulièrement une surface de butée (43) de la paroi frontale (39), du corps de couplage (7) s'appuyant contre la première portion radiale (44).

6. Silencieux selon la revendication 5, **caractérisé en ce que**, à la première portion radiale (44) se raccorde une deuxième portion axiale (46), qui s'étend en direction de la chambre de résonateur (12) et qui est conçue comme un logement de joint d'étanchéité, l'élément d'étanchéité (27) étant logé au niveau de sa paroi intérieure (47) et la deuxième portion axiale (46) présentant une dimension de section transversale (50, 48) inférieure à celle de la première portion axiale (20).

7. Silencieux selon la revendication 6, **caractérisé en ce que**, suite à la deuxième portion axiale (46) de la première partie de boîtier (2), est réalisée une deuxième portion radiale (51), qui s'étend en direction du centre de la section transversale et qui est conçue comme une butée axiale pour l'élément d'étanchéité (27).

8. Silencieux selon la revendication 7, **caractérisé en ce que**, à la deuxième portion radiale (51) se raccorde une troisième portion axiale (56), qui s'étend en direction de la chambre de résonateur (12), la troisième portion axiale (56) présentant une dimension de section transversale (58, 50) inférieure à celle de la deuxième portion axiale (46).

9. Silencieux selon l'une des revendications 7 à 8, **caractérisé en ce que** la distance axiale (53) entre une première surface de butée (45) de la première portion radiale (44) et une deuxième surface de butée (52) de la deuxième portion radiale (51) étant supérieure à une extension axiale (54) de l'élément d'étanchéité (27).

10. Silencieux selon l'une des revendications 6 à 9, **caractérisé en ce que** la paroi frontale (39) du corps de couplage (7) s'étend plus loin en direction du centre de la section transversale que la paroi intérieure (47) de la deuxième portion axiale (46), la paroi frontale (39) formant ainsi une zone partielle (55) dépassant par rapport à la deuxième portion axiale (46), et l'élément d'étanchéité (27) étant ainsi protégé contre un déplacement axial dans l'embout (23) se rétrécissant par paliers.

11. Silencieux selon l'une des revendications 4 à 10, **caractérisé en ce que** la portion de fixation (38) du corps de couplage (7) est reliée avec la première portion axiale (34) et/ou avec la première paroi frontale (16) de la première partie de boîtier (2) par liaison de matière, comme une liaison par soudure, plus particulièrement une liaison par soudure au laser.

12. Silencieux selon l'une des revendications 5 à 10, **caractérisé en ce que** la paroi frontale (39) du corps de couplage (7) est reliée avec la première portion radiale (44) de la première partie de boîtier (2) par une liaison de matière, comme une liaison par soudure, plus particulièrement une liaison par soudure au laser.

13. Silencieux selon l'une des revendications 4 à 10, **caractérisé en ce que** la portion de fixation (38) du corps de couplage (7) est reliée avec la première portion axiale (34) de la première partie de boîtier (2) par une liaison par complémentarité de forme, comme un pressage (66).

14. Véhicule, plus particulièrement véhicule routier, avec un silencieux (1), plus particulièrement un silencieux de turbocompresseur, qui est disposé sur le côté de pression d'un turbocompresseur (9), **caractérisé en ce que** le silencieux (1) est conçu selon l'une des revendications précédentes.
